# FASCICULE DE BREVET EUROPEEN

(11) **EP 0 460 981 B1**
(45) Date de publication et mention de la délivrance du brevet: **30.11.1994**
(21) Numéro de dépôt: 91401172.1
(22) Date de dépôt: 03.05.1991
(51) Int. Cl.: A01D 19/16

(54) **Machine d'arrachage des betteraves**
Maschine zum Roden von Rüben
Machine for lifting beets

(30) Priorité: 14.05.1990 FR 9005983
(43) Date de publication de la demande: 11.12.1991
(73) Titulaire: S.A. MOREAU, F-59159 Noyelles Sur Escaut (FR)
(72) Inventeur: Jette, Etienne, F-59159 Marcoing (FR)
(74) Mandataire: Aron, Georges

(56) Documents cités:
- EP-A- 0 098 824
- FR-A- 1 552 869
- FR-A- 2 133 200
- FR-A- 2 363 976
- FR-A- 2 533 798
- FR-A- 2 552 299

## Description

La présente invention est relative à une machine d'arrachage de betteraves ou analogues, à quatre roues, en particulier automotrice.

Une machine arracheuse de betteraves typique comprend un châssis qui porte, entre les roues avant et arrière, un ensemble d'arrachage qui comprend des outils d'arrachage, tels que des socs, portés par une barre transversale, des disques ramasseurs placés directement en arrière, dans le sens de la marche, des outils d'arrachage, ces disques ramasseurs étant suivis d'une série de moyens de transfert et de secouage, par acheminer finalement les betteraves jusqu'à les déverser dans une bennes circulant à côté de la machine d'arrachage.

Les outils d'arrachage, les disques de ramassage, et une partie des moyens de transfert et de secouage, sont portés par un bâti commun, soutenu par le châssis, par des moyens articulés ou des chaînes. En effet, il est important que certains déplacements soient possibles entre les moyens d'arrachage et le châssis.

En fait, les contraintes auxquelles doit répondre la liaison entre le bâti porteur des moyens d'arrachage et de ramassage sont complexes.

Les outils d'arrachage doivent pouvoir se déplacer verticalement, afin d'être relevés au-dessus du sol, notamment pour les déplacements sur route. Ils doivent également pouvoir se déplacer verticalement d'eux-mêmes au cas où ils rencontreraient un obstacle dans le sol. En marche normale, les outils d'arrachage sont calculés pour qu'ils se placent naturellement au niveau convenable par rapport à la surface du sol. Les outils d'arrachage doivent également pouvoir se déplacer légèrement dans le sens transversal, de façon à pouvoir compenser le fait que, notamment en début de ligne, il arrive que les roues de la machine ne sont pas placées de façon tout à fait correcte par rapport aux rangées de betteraves à arracher. En outre, pour un fonctionnement correct, il faudrait que la barre qui porte les outils d'arrachage reste toujours parallèle à la surface du sol, ce qui implique qu'elle puisse osciller, dans un plan transversal, par rapport au châssis. En effet, il est fréquent de constater que les roues s'enfoncent plus dans le sol du côté où celui-ci a déjà été foulé lors du passage précédent de la machine.

D'un autre côté, la partie arrière du bâti qui, outre les outils d'arrachage et les disques de ramassage, porte les premiers éléments du système de transfert doit rester à peu près fixe dans le sens transversal par rapport au châssis. En effet, dans cette région de la machine, il y a peu de place entre les roues arrière de la machine, et un déplacement transversal, même relativement faible, pourrait amener l'appareillage à heurter les roues. En revanche, des déplacements un peu plus importants peuvent être tolérés dans le sens d'avant en arrière et en hauteur. Cependant, en hauteur, il n'est pas besoin de prévoir une amplitude comparable à celle qui correspond, à l'avant, au relevage destiné au transfert sur route, car les appareillages portés à l'arrière du bâti sont généralement déjà à une hauteur largement suffisante pour de tels déplacements.

La complexité des problèmes est telle qu'aucune machine existante jusqu'ici ne répond exactement à toutes les conditions qu'on vient d'exposer. On trouve, en effet, sur toutes les machines, une possibilité de relevage, car cela est indispensable pour les déplacements sur route, et sur certaines on trouve également une possibilité de déplacement dans le sens transversal, comme dans FR-A-2.533.798. A l'avant, pour obtenir une bonne précision sur la place des outils d'arrachage, on prévoit habituellement des liaisons à articulation entre le bâti et le châssis. A l'arrière, la suspension est souvent réalisée à l'aide de deux chaînes verticales, qui permettent des mouvements essentiellement d'avant en arrière, et un pivotement vers le haut de la partie avant, mais s'opposent à un pivotement dans un plan transversal.

On a proposé, dans FR-A-2.363.976 dans une machine d'arrachage et récolte de pommes de terre et analogues, de suspendre le bâti à un câble de réglage de hauteur et à un autre câble qui est attaché en deux points du bâti situés dans le même plan transversal et qui passe sur deux poulies de même plan. Des galets roulant sur des surfaces verticales transversales s'opposent aux déplacements vers l'arrière. Ce système permet d'incliner le bâti par rapport à un axe longitudinal, mais il ne permet pas de déplacement dans la direction transversale, et en outre le mode de suspension du bâti aboutit à une mauvaise précision de la position des outils.

La présente invention a pour but de fournir une machine d'arrachage de betteraves améliorée, qui réponde au mieux à toutes les conditions qu'on a exposées plus haut et qui soit cependant simple et robuste.

La présente invention fournit en conséquence une machine d'arrachage de betteraves ou analogues, à quatre roues, en particulier automotrice, comprenant un châssis équipé de roues avant et arrière, des outils d'arrachage et des disques ramasseurs placés entre les roues avant et arrière, et des moyens de transfert acheminant les betteraves entre les roues arrière, les outils d'arrachage, les disques ramasseurs et la partie avant des moyens de transfert étant montés sur un bâti commun qui est relié à l'avant et à l'arrière au châssis par des liaisons à articulations qui permettent le relevage du bâti et un déplacement transversal des moyens d'arrachage, caractérisée en ce que lesdites liaisons comprennent des articulations à trois axes, qui permettent, outre les mouvements en hauteur et transversaux mentionnés ci-dessus, un pivotement autour d'un axe longitudinal, horizontal ou peu incliné.

On observera tout d'abord que, attendu qu'il y a des possibilités de mouvement du bâti par rapport au châssis, on doit entendre par vertical, longitudinal ou transversal, un mouvement ou un axe qui peut faire un angle relativement faible, par exemple pas plus de 20° environ, autour de la direction considérée. La direction verticale est considérée comme la direction perpendiculaire à la surface du sol, la direction longitudinale est la parallèle à la direction d'avancement, et la direction transversale est, bien entendu, une horizontale perpendiculaire aux autres directions.

A propos de liaison articulée, il convient de noter qu'il existe plusieurs sortes d' articulations. L'articulation la plus simple est une articulation à un seul axe, analogue par exemple à un gond de porte. Parmi les articulations à deux axes perpendiculaires entre eux, on peut distinguer les articulations à deux axes concourants, comme par exemple un joint universel, ou des articulations à deux axes non exactement concourants, telles que celles formées par une bielle portant à ses deux extrémités deux articulations chacune à un axe, les axes étant perpendiculaires entre eux. De même, on peut distinguer les articulations à trois axes concourants, c'est-à-dire constituées comme une rotule, et des articulations à trois axes qui ne sont pas exactement concourants, ou bien dont deux sont concourants et le troisième ne passe pas par l'intersection des deux premiers. Dans la pratique, si la distance entre les axes qui ne se coupent pas est faible, les dispositions sont sensiblement équivalentes.

On distinguera dans la suite du texte, des articulations à deux axes et des articulations à trois axes, ces articulations pouvant être, ou ne pas être, des joints universels ou des rotules.

Le fait de prévoir, selon l'invention, des liaisons à articulations permettant des mouvements dans trois dimensions, à la place de suspension par chaîne ou autre connue dans l'art antérieur, permet un meilleur contrôle de la position des outils d'arrachage par rapport aux rangées de betteraves à l'avant, et, à l'arrière du bâti, de la partie des moyens de transfert portés par ce bâti par rapport, notamment, aux roues de la machine.

De préférence, les liaisons à articulation placées à l'avant et à l'arrière du bâti comprennent chacune au moins une rotule. On limite ainsi le nombre des articulations, tout en assurant une meilleure précision dans la position du bâti.

Avantageusement, pour commander les pivotements autour de l'axe longitudinal, il est prévu au moins un vérin intercalé entre le châssis et le bâti.

Suivant une réalisation préférée, pour commander les mouvements transversaux, la liaison entre l'avant du bâti et le châssis comprend une pièce de liaison fixe dans le sens transversal par rapport au châssis, et une pièce intermédiaire, reliée au bâti par une première articulation ayant un axe vertical, à la pièce intermédiaire par une deuxième articulation à axe vertical, cette pièce intermédiaire portant une troisième articulation à axe vertical, cette troisième articulation pouvant être déplacée transversalement sous l'action d'un vérin par rapport au châssis, si bien que les déplacements transversaux de la troisième articulation sont multipliés par effet de levier pour assurer les déplacements désirés de l'avant du bâti et, par conséquent, des outils d'arrachage. Avantageusement, dans ce cas, la pièce de liaison est en forme d'étrier horizontal, avec les paliers de l'articulation à axe transversal portés par les branches de l'étrier, la deuxième articulation à axe vertical portée par le centre de l'étrier, et le vérin est un vérin à double tige horizontal dont le corps est solidaire de la troisième articulation à axe vertical, alors que les tiges du vérin sont reliées aux deux branches de l'étrier. La disposition qu'on vient de décrire présente l'avantage de n'exiger qu'un vérin de faible longueur, dont peu encombrant, et la forme en étrier de la pièce de liaison a également été étudiée pour un encombrement minimal, et en particulier pour ne pas gêner le déplacement des roues avant qui sont des roues directrices.

Il est possible, sans sortir de l'invention, de permuter, dans ce qui précède, les mots "châssis" et "bâti", c'est-à-dire de prévoir que la pièce de liaison est fixe dans le sens transversal par rapport au bâti, la pièce intermédiaire étant alors reliée au châssis, et la troisième articulation à axe vertical étant mobile par rapport au bâti.

De préférence, la liaison à articulation arrière du bâti au châssis comprend une première articulation permettant des pivotements autour de trois axes, solidaire du bâti et reliée par une courte bielle intermédiaire à une deuxième articulation permettant uniquement des pivotements autour d'un axe transversal, si bien que l'arrière du bâti reste à peu près fixe, dans le sens transversal, par rapport au châssis, et que les mouvements transversaux de l'avant du bâti sont en fait des pivotements autour de l'axe vertical de la première articulation de la liaison arrière. Les mouvements de pivotement autour d'un axe longitudinal sont, évidemment, des mouvements de pivotement autour de la première articulation. Cependant, les mouvements verticaux de l'avant du bâti se traduisent par des mouvements en arc de cercle dans un plan vertical longitudinal de l'arrière du bâti, la longueur de la bielle et la position des articulations peuvent être facilement calculées pour que ces mouvements ne puissent pas gêner le fonctionnement de la machine.

Les mouvements verticaux du bâti peuvent être commandés, de façon classique, par des vérins placés entre le châssis et l'avant du bâti. Suivant une réalisation intéressante, ces vérins peuvent être utilisés pour commander aussi le pivotement du bâti autour d'un axe longitudinal.

La présente invention va maintenant être décrite de façon plus précise à l'aide d'exemples pratiques illustrés à l'aide des dessins parmi lesquels :
Figure 1 est une vue schématique d'ensemble, en élévation, d'une machine arracheuse-chargeuse automotrice.
Figure 2 est une vue schématique, en élévation, du dispositif selon l'invention.
Figure 3 est une vue plan schématique du même dispositif.
Figures 4 est une vue de détail, en perspective, de la liaison avant.

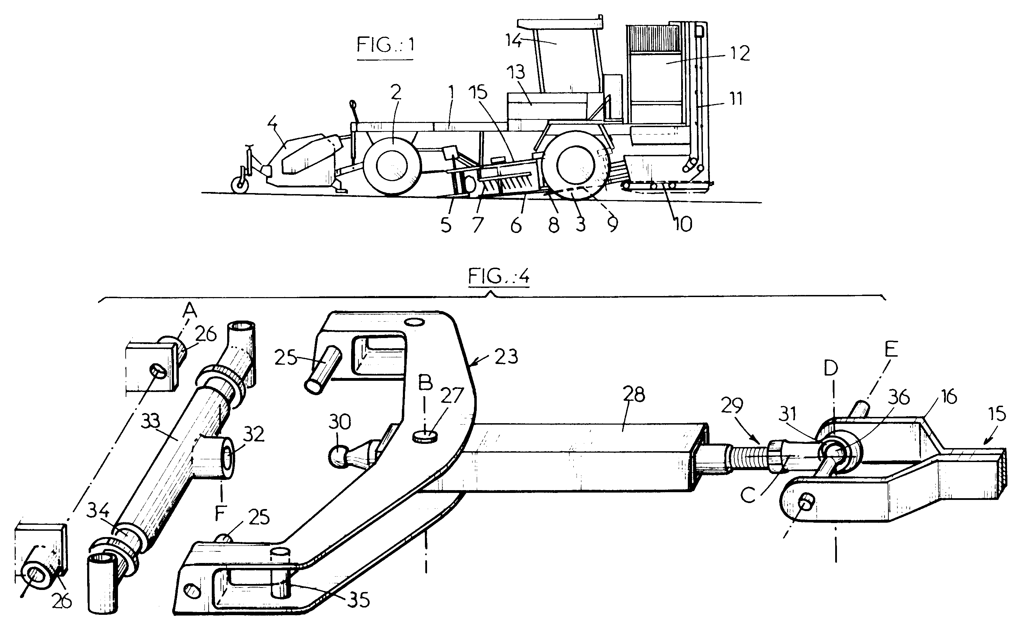

La figure 1 est destinée à permettre de se remettre en mémoire les éléments principaux d'une machine automotrice arracheuse-chargeuse.

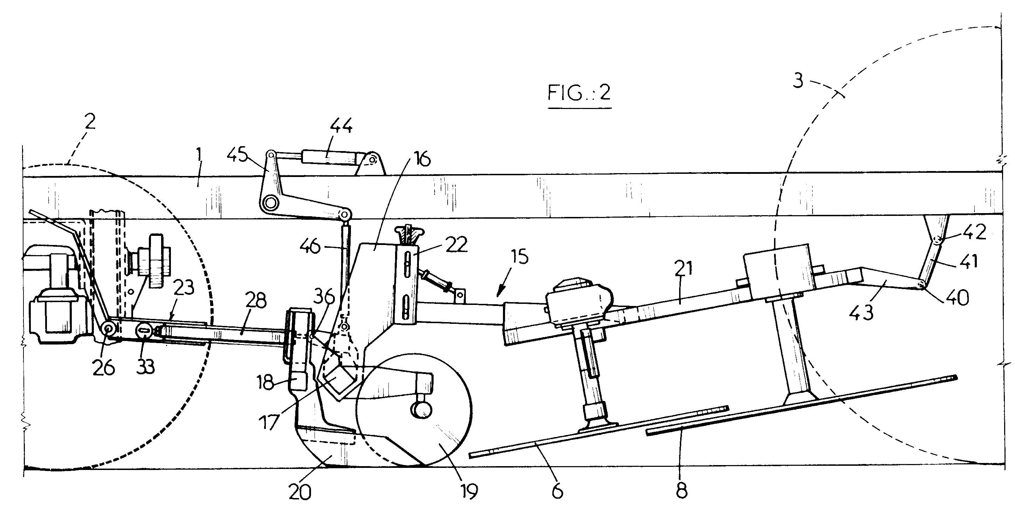

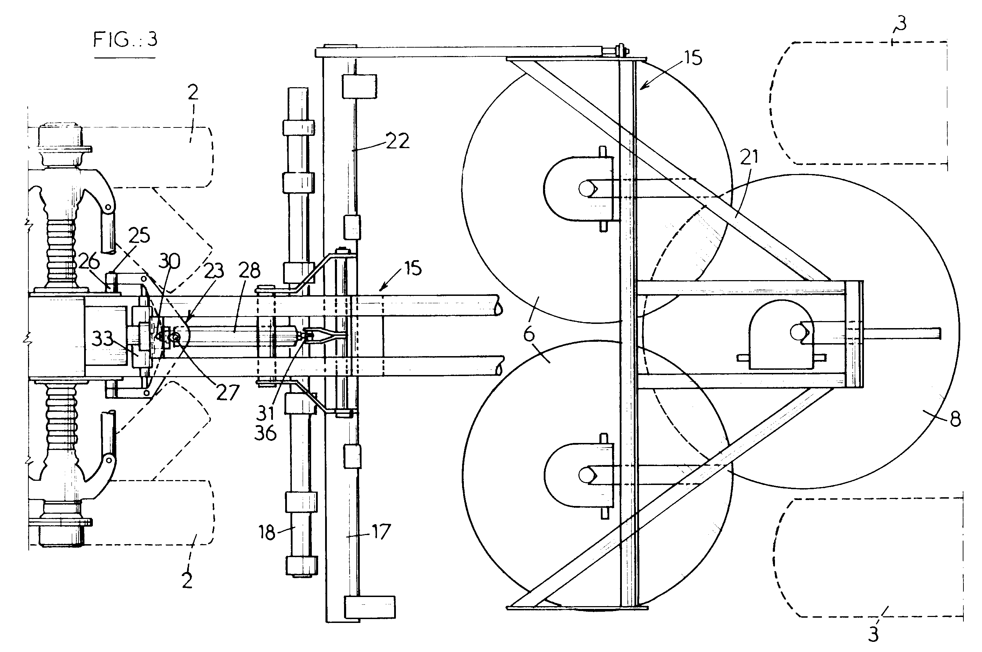

Un châssis principal 1 est équipé, à l'avant, de roues directrices 2 et, à l'arrière, de roues motrices 3, de plus grand diamètre que les roues directrices. A l'avant des roues directrices, le châssis supporte un appareillage 4 pour effeuiller les betteraves, qui ne sera pas décrit plus avant. Entre les roues avant et arrière sont disposés les outils d'arrachage 5, et derrière ceux-ci deux disques ramasseurs 6, dont le bord avant est pratiquement en contact avec le sol, et qui sont entourés par des grilles de guidage 7. En arrière des disques ramasseurs, deux disques successifs 8, 9, faisant partie des moyens de transfert et de nettoyage, sont en partie ou en totalité masqués par les roues arrière 3. Le dispositif de transfert et nettoyage se continue par différents moyens de transfert et d'élévation 10, 11, 12 qui ne seront pas décrits plus loin. Le châssis porte encore, à peu près à l'aplomb des roues arrière, un moteur 13 et une cabine 14. Les outils d'arrachage 5, les disques de ramassage 6 avec leur grille 7, et le premier disque 8 des moyens de transfert et de nettoyage sont portés ensembles par un bâti 15, qu'on retrouvera aux figures 2 et 3.

La figure 2 est une vue agrandie de la partie centrale de la figure 1, entre les roues avant 2 et les roues arrière 3. Une partie seulement du châssis 1 est donc visible, alors que le bâti 15 est visible en entier, avec ses moyens de liaison avant et arrière avec le châssis. Le bâti 15 est en deux parties, une partie avant 16 qui porte, par l'intermédiaire de barres transversales 17, 18, les outils d'arrachage, ici des disques 19 et leurs patins de guidage 20. La partie arrière du bâti 21 porte les disques de ramassage 6, avec leurs moyens d'entraînement, et le premier disque des moyens de transfert et nettoyage 8. Des moyens de réglage 22 servent à solidariser les deux parties du bâti 15.

La figure 3 permet de se rendre compte de quelques-unes des contraintes auxquelles se heurtent le concepteur. A l'arrière, le disque 8 se trouve engagé dans le passage étroit défini par les volumineuses roues motrices 3, et on observe qu'il ne peut supporter que des déplacements latéraux d'importance limitée. A l'avant, si aucun obstacle ne s'oppose aux déplacements latéraux des outils d'arrachage, on observe que la position de braquage des roues directrices 2 en cas de virage serré, dessinée en trait mixte, ne laisse que peu de place pour les moyens de liaison avant.

On va maintenant décrire ceux-ci de façon plus détaillée en s'aidant de la figure 4.

Cette figure montre une pièce de liaison 23, en forme d'étrier, qui porte, à ses extrémités , deux pivots 25, coaxiaux, qui viennent pivoter sur des paliers 26 portés par le châssis, de façon à former une articulation d'axe transversal A, fixe, par rapport au châssis. La pièce 23 porte encore, en sa partie centrale, des pivots 27 d'axe vertical B, une pièce intermédiaire 28 est montée de façon à pivoter sur les pivots 27, autour de l'axe B. Cette pièce intermédiaire est terminée à l'avant par une première rotule 30, et porte à l'arrière, avec interposition d'une vis de réglage 29, un logement de rotule creuse 31. La rotule avant 30 pénètre dans un logement 32, porté par le corps 33 d'un vérin à double tige, dont les tiges 34 sont en appui sur des tenons 35 portés par la pièce de liaison 23 en forme d'étrier, à une certaine distance du pivot 27.

Le logement 32 est un logement cylindrique à axe longitudinal. L'articulation formée par la rotule 30 et son logement 32 permet un pivotement autour d'un axe vertical F, et des déplacements longitudinaux, qui servent à compenser les variations de la distance entre les pivots 27 et le logement 32 qui résultent des déplacements transversaux du corps de vérin 33. L'articulation 30, 32 permettrait en elle-même des pivotements autour d'un axe transversal, mais ceux-ci sont empêchés par la présence de la pièce de liaison 23.

Le logement de rotule 31 coopère avec une rotule 36, solidaire de la partie avant 16 du bâti 15. L'articulation formée par la rotule 36 et son logement 31 permet des pivotements autour d'un axe longitudinal C, d'un axe vertical D et d'un axe transversal E.

La présence des deux axes verticaux parallèles B et D, écartés l'un de l'autre, permet à la partie avant 16 du bâti de décrire des déplacements transversaux relativement importants. De même, la présence de deux axes transversaux A, E, qui sont encore plus écartés l'un de l'autre, permet des mouvements importants de la partie avant du bâti dans le sens vertical, indépendamment de son orientation.

Le vérin 33, 34 permet de commander les déplacements transversaux de la partie avant du bâti, les déplacements relatifs du corps de vérin 33 par rapport aux extrémités de ses tiges sont multipliés par le rapport des distances entre le logement 32 et l'axe vertical B d'une part, et entre cet axe vertical B et l'axe vertical D d'autre part.

On conçoit qu'il est possible de retourner le dispositif, en prévoyant que les paliers 26 sont portés par le bâti, et la rotule 36 par le châssis. Le fonctionnement sera évidemment le même. La rotule 30 et son logement 32 peuvent être remplacés par tout dispositif permettant un pivotement sur un axe vertical et un coulissement longitudinal.

La pièce intermédiaire 28, 29 est, en direction générale, sensiblement longitudinale. Cela a pour conséquence que les pivotements autour de l'axe transversal A ou autour de l'axe vertical B entraînent de faibles déplacements longitudinaux et transversaux du bâti 15. Ces déplacements sont cependant trop importants pour qu'on puisse soutenir le bâti, à l'arrière, par une simple rotule qui serait solidaire du châssis. On a prévu, à l'arrière du bâti 15, une articulation à rotule 40, solidaire du bâti, et reliée au châssis par l'intermédiaire d'une bielle 41, elle-même articulée sur le châssis par une articulation 42 à axe transversal. La bielle 41 est à peu près verticale, si bien que les déplacements de l'arrière du châssis n'ont pour conséquence que de faibles déplacements à peu près longitudinaux de l'arrière de celui-ci. En conséquence, le disque 8 porté par le bâti reste toujours à peu près à la même distance des roues arrière 3, et à peu près toujours à la même hauteur au-dessus du disque 9 qui le suit, et qui fait partie aussi des moyens de transfert et de nettoyage. On observera également que la partie arrière 21 du bâti se termine par une partie 43 inclinée vers le bas, et qui porte l'articulation à rotule 40. On diminue ainsi la distance entre cette rotule 40 et le disque 8, ce qui réduit les effets du pivotement autour d'un axe longitudinal, lequel est l'axe passant par l'articulation à rotule 40 et l'articulation à rotule 31, 36.

On a représenté en 44, un vérin de levage, porté par le châssis 1, et qui, par l'intermédiaire d'un renvoi 45 et d'une bielle télescopique 46 permet d'élever le bâti 15 et par conséquent de soulever les moyens d'arrachage et de ramassage au-dessus du sol pour la position de transport. La bielle télescopique 46 permet le soulevage spontané des moyens d'arrachage lorsqu'ils rencontrent un obstacle dans le sol. Il est prévu deux vérins 44, agissant chacun sur un côté du bâti 15 par une bielle respective 46. En cas de besoin, il est possible de n'actionner qu'un de ces vérins de façon à donner une inclinaison volontaire au bâti 15 par rapport au châssis 1. Toutefois, l'expérience montre qu'en général une telle intervention n'est pas nécessaire, et que les outils de ramassage s'orientent spontanément pour être à la profondeur correcte dans le sol. Dans ce cas, un seul vérin 44 peut commander les deux bielles 46.

On peut éventuellement donner une inclinaison volontaire au bâti en réglant la longueur des bielles 46. Celles-ci sont alors pourvues de vis de réglage, l'une au moins de ces vis de réglage peut être remplacée par un vérin, pour une commande à distance.

## Revendications

1. Machine d'arrachage de betteraves ou analogues à quatre roues, en particulier automotrice, comprenant un châssis (1) équipé de roues avant (2) et arrière (3), des outils d'arrachage (5) et des disques ramasseurs (6) placés entre les roues avant et arrière, et des moyens de transfert (8, 12) acheminant les betteraves entre les roues arrière, les outils d'arrachage, les disques ramasseurs et la partie avant (8) des moyens de transfert étant montés sur un bâti commun (15) qui est relié, à l'avant et à l'arrière, au châssis (1) par des liaisons à articulations qui permettent le relevage du bâti (15) et un déplacement transversal des moyens d'arrachage,
caractérisée en ce que lesdites liaisons comprennent des articulations à trois axes, qui permettent, outre les mouvements en hauteur et transversaux mentionnés ci-dessus, un pivotement autour d'un axe longitudinal, horizontal ou peu incliné.

2. Machine selon la revendication 1, caractérisée en ce que, pour permettre les pivotements autour de l'axe longitudinal, les liaisons avant et arrière du bâti au châssis comprennent chacune au moins une rotule (31, 36; 40).

3. Machine selon la revendication 1 ou 2, caractérisée en ce que, pour commander lesdits pivotements autour de l'axe longitudinal, il est prévu au moins un vérin entre le châssis et le bâti.

4. Machine selon l'une des revendications 1 ou 2, caractérisée en ce que, pour commander les mouvements transversaux, la liaison entre l'avant du bâti et le châssis comprend une pièce de liaison (23), fixe dans le sens transversal par rapport au châssis (ou au bâti) et une pièce intermédiaire (28) reliée au bâti (ou au châssis) par une première articulation (31, 36) ayant un axe vertical (D), à la pièce de liaison par une deuxième articulation (27) à axe vertical (B) et portant une troisième articulation (30, 32) ayant un axe vertical (F), cette troisième articulation pouvant être déplacée transversalement sous l'action d'un vérin (33, 34) par rapport au châssis (ou au bâti), si bien que les déplacements transversaux de la troisième articulation sont appliqués à l'avant du bâti en étant multipliés par effet de levier.

5. Machine selon la revendication 4, caractérisée en ce que la pièce de liaison (23) est reliée au châssis (ou au bâti) par une articulation (25, 26) à axe transversal (A), qui permet les déplacements en hauteur du bâti.

6. Machine selon la revendication 5, caractérisée en ce que la pièce de liaison (23) est en forme d'étrier horizontal, avec les pivots (25) de l'articulation à axe transversal (A) portés par les branches de l'étrier, la deuxième articulation (27) à axe vertical (B) portée au centre de l'étrier, et le vérin (33, 34) est un vérin à double tige horizontal, solidaire de la troisième articulation (30, 32) à axe vertical, alors que les tiges dudit vérin sont reliées aux deux branches de l'étrier.

7. Machine selon la revendication 6,caractérisée en ce que la troisième articulation (30, 32) à axe vertical est une articulation qui permet des pivotements autour d'un axe vertical (F) et des déplacements longitudinaux, et la pièce intermédiaire (28) porte à une extrémité ladite articulation (30, 32) et à son autre extrémité la première articulation (31, 36) à axe vertical (D), qui la relie au bâti en permettant en plus un pivotement autour d'un axe longitudinal (C).

8. Machine selon la revendication 6, caractérisée en ce que la première articulation (31, 36) à axe vertical permet des pivotements autour d'un axe vertical (D), d'un axe longitudinal (C) et d'un axe transversal (E).

9. Machine selon l'une des revendications 1 à 8, caractérisé en ce que la liaison arrière du châssis au bâti comprend une première articulation (40) permettant des pivotements autour d'un axe vertical, d'un axe longitudinal et d'un axe transversal, solidaire du bâti (ou du châssis) reliée par une bielle (41) intermédiaire à une deuxième articulation (42) permettant uniquement des pivotements autour d'un axe transversal, si bien que l'arrière du bâti reste à peu près fixe, dans le sens transversal par rapport au châssis, les mouvements transversaux de l'avant du bâti étant en fait des pivotements autour de l'axe vertical de ladite première articulation.

10. Machine selon l'une des revendications 1 à 9, dans laquelle pour commander les mouvements verticaux du bâti, il est prévu deux vérins (44) placés entre le châssis et l'avant du bâti, caractérisée en ce que lesdits vérins servent également à commander le pivotement du bâti autour d'un axe longitudinal.

## Claims

1. Four-wheeled machine, particularly an automotive apparatus, for harvesting beetroot or the like, comprising a chassis (1) equipped with front wheels (2) and rear wheels (3), harvesting tools (5) and collecting discs (6) placed between the front and rear wheels, and transfer means (8, 12) conveying the beetroot between the rear wheels, the harvesting tools, the collecting discs and the front part (8) of the transfer means being mounted on a common structure (15) which is attached, at the front and back, to the chassis (1) by articulated connections which allow the structure (15) to be raised and the harvesting means to be moved transversely, characterised in that said connections comprise articulations with three axes which permit, in addition to the vertical and transverse movements mentioned above, pivoting about a longitudinal, horizontal or slightly inclined axis.

2. Machine according to claim 1, characterised in that, in order to allow pivoting about the longitudinal axis, the front and rear connections of the structure to the chassis each comprise at least one ball joint (31, 36; 40).

3. Machine according to claim 1 or 2, characterised in that, for the purpose of controlling said pivoting about the longitudinal axis, at least one jack is provided between the chassis and the structure.

4. Machine according to one of claims 1 and 2, characterised in that, for controlling the transverse movements, the connection between the front of the structure and the chassis comprises a connecting member (23) fixed transversely relative to the chassis (or structure) and an intermediate member (28) connected to the structure (or to the chassis) by a first joint (31, 36) having a vertical axis (D), to the connecting member by a second joint (27) having a vertical axis (B) and having a third joint (30, 32) having a vertical axis (F), this third joint being adapted to move transversely under the effect of a jack (33, 34) relative to the chassis (or to the structure), so that the transverse movements of the third joint are applied to the front of the structure, being multiplied by the lever effect.

5. Machine according to claim 4, characterised in that the connecting member (23) is connected to the chassis (or to the structure) by a joint (25, 26) having a transverse axis (A), which permits the vertical movements of the structure.

6. Machine according to claim 5, characterised in that the connecting member (23) is in the form of a horizontal stirrup, with the pivots (25) of the joint having a transverse axis (A) supported by the branches of the stirrup, the second joint (27) with a vertical axis (B) supported on the centre of the stirrup, and the jack (33, 34) is a jack with a double horizontal rod, integral with the third joint (30, 32) having a vertical axis, while the rods of said jack are connected to the two arms of the stirrup.

7. Machine according to claim 6, characterised in that the third joint (30, 32) with a vertical axis is a joint which allows pivoting about a vertical axis (F) and longitudinal movements, and the intermediate member (28) has at one end the said joint (30, 32) and at its other end the first joint (31, 36) with a vertical axis (D), which connects it to the structure whilst further allowing pivoting about a longitudinal axis (C).

8. Machine according to claim 6, characterised in that the first joint (31, 36) having a vertical axis permits pivoting about a vertical axis (D), a longitudinal axis (C) and a transverse axis (E).

9. Machine according to one of claims 1 to 8, characterised in that the rear connection of the chassis to the structure comprises a first joint (40) which allows pivoting about a vertical axis, a longitudinal axis and a transverse axis, integral with the structure (or the chassis) connected by an intermediate rod (41) to a second joint (42) which allows pivoting only about a transverse axis, so that the rear of the structure remains substantially fixed, in the transverse direction relative to the chassis, the transverse movements of the front of the structure actually being pivoting movements about the vertical axis of said first joint.

10. Machine according to one of claims 1 to 9, in which, for the purpose of controlling the vertical movements of the structure, two jacks (44) are provided which are located between the chassis and the front of the structure, characterised in that said jacks also serve to control the pivoting of the structure about a longitudinal axis.

## Patentansprüche

1. Maschine zum Roden von Rüben oder dergleichen, insbesondere selbstfahrend, mit vier Rädern, umfassend ein mit Vorderrädern (2) und Hinterrädern (3) ausgerüstetes Gestell (1), Rodewerkzeuge (5), zwischen den Vorder- und Hinterrädern angeordnete Sammelscheiben (6) und Fördermittel (8, 12), die die Rüben zwischen die Hinterräder befördern, wobei die Rodewerkzeuge, die Sammelscheiben und der vordere Teil (8) der Fördereinrichtungen auf einem gemeinsamen Rahmen (15) montiert sind, der vorne und hinten mit dem Gestell (1) durch Gelenkverbindungen verbunden ist, die das Anheben des Rahmens (15) und eine Querbewegung der Rodewerkzeuge gestatten, dadurch gekennzeichnet, daß diese Verbindungen Gelenke mit drei Achsen aufweisen, die, abgesehen von den oben genannten Höhen- und Querbewegungen, eine Schwenkbewegung um eine horizontale oder leicht geneigte Längsachse gestatten.

2. Maschine nach Anspruch 1, dadurch gekennzeichnet, daß die vordere und die hintere Verbindung des Rahmens mit dem Gestell, um die Schwenkbewegungen um die Längsachse zu gestatten, jeweils mindestens ein Kugelgelenk (31, 36; 40) umfassen.

3. Maschine nach Anspruch 1 oder 2, dadurch gekennzeichnet, daß zur Steuerung dieser Schwenkbewegungen um die Längsachse mindestens ein Arbeitszylinder zwischen dem Gestell und dem Rahmen vorgesehen ist.

4. Maschine nach einem der Ansprüche 1 oder 2, dadurch gekennzeichnet, daß die Verbindung zwischen dem vorderen Teil des Rahmens und dem Gestell, um die Querbewegungen zu steuern, ein Verbindungsteil (23), das in der Querrichtung bezüglich des Gestells (oder des Rahmens) feststehend ist, und ein Zwischenteil (28) umfaßt, das mit dem Rahmen (oder mit dem Gestell) durch ein erstes Gelenk (31, 36) mit einer vertikalen Achse (D) und mit dem Verbindungsteil durch ein zweites Gelenk (27) mit vertikaler Achse (B) verbunden ist und ein drittes Gelenk (30, 32) mit einer vertikalen Achse (F) trägt, das unter der Einwirkung eines Arbeitszylinders (33, 34) bezüglich des Gestells (oder des Rahmens) quer bewegt werden kann, so daß die Querbewegungen des dritten Gelenks an den vorderen Teil des Rahmens angelegt werden, indem sie durch Hebelwirkung vervielfacht werden.

5. Maschine nach Anspruch 4, dadurch gekennzeichnet, daß das Verbindungsteil (23) mit dem Gestell (oder mit dem Rahmen) durch ein Gelenk (25, 26) mit einer Querachse (A) verbunden ist, das die Höhenbewegungen des Rahmens gestattet.

6. Maschine nach Anspruch 5, dadurch gekennzeichnet, daß das Verbindungsteil (23) in Form eines horizontalen Bügels ist, wobei die Drehzapfen (25) des Gelenks mit Querachse (A) von den Schenkeln des Bügels getragen sind und das zweite Gelenk (27) mit vertikaler Achse (B) in der Mitte des Bügels getragen ist, und der Arbeitszylinder (33, 34) ein Arbeitszylinder mit doppelter horizontaler Stange ist, der mit dem dritten Gelenk (30, 32) mit vertikaler Achse fest verbunden ist, während die Stangen dieses Arbeitszylinders mit den beiden Schenkeln des Bügels verbunden sind.

7. Maschine nach Anspruch 6, dadurch gekennzeichnet, daß das dritte Gelenk (30, 32) mit vertikaler Achse ein Gelenk ist, das Schwenkbewegungen um eine vertikale Achse (F) und Längsbewegungen gestattet, und das Zwischenteil (28) an einem Ende dieses Gelenk (30, 32) und an seinem anderen Ende das erste Gelenk (31, 36) mit vertikaler Achse (D) trägt, das es mit dem Rahmen verbindet, indem es zusätzlich eine Schwenkbewegung um eine Längsachse (C) gestattet.

8. Maschine nach Anspruch 6, dadurch gekennzeichnet, daß das erste Gelenk (31, 36) mit vertikaler Achse Schwenkbewegungen um eine vertikale Achse (D), eine Längsachse (C) und eine Querachse (E) gestattet.

9. Maschine nach einem der Ansprüche 1 bis 8, dadurch gekennzeichnet, daß die hintere Verbindung des Gestells mit dem Rahmen ein erstes Gelenk (40) umfaßt, das Schwenkbewegungen um eine vertikale Achse, eine Längsachse und eine Querachse gestattet, mit dem Rahmen (oder mit dem Gestell) fest verbunden ist und durch eine Zwischenkoppel (41) mit einem zweiten Gelenk (42) verbunden ist, das nur Schwenkbewegungen um eine Querachse gestattet, so daß der hintere Teil des Rahmens in Querrichtung bezüglich des Gestells annähernd feststehend bleibt, während die Querbewegungen des vorderen Teils des Rahmens praktisch Schwenkbewegungen um die vertikale Achse des ersten Gelenks sind.

10. Maschine nach einem der Ansprüche 1 bis 9, in der zur Steuerung der vertikalen Bewegungen des Rahmens zwei zwischen dem Gestell und dem vorderen Teil des Rahmens angeordnete Arbeitszylinder (44) vorgesehen sind, dadurch gekennzeichnet, daß diese Arbeitszylinder auch zur Steuerung der Schwenkbewegung des Rahmens um eine Längsachse dienen.
